Europäisches Patentamt

European Patent Office

Office européen des brevets

(11) Veröffentlichungsnummer: **0 499 686 A1**

# EUROPÄISCHE PATENTANMELDUNG

(21) Anmeldenummer: **91115691.7**

(22) Anmeldetag: **16.09.91**

(51) Int. Cl.5: **A47G 19/14**, A47J 31/06

(30) Priorität: **18.02.91 DE 4104880**

(43) Veröffentlichungstag der Anmeldung:
**26.08.92 Patentblatt  92/35**

(84) Benannte Vertragsstaaten:
**AT BE CH DE DK ES FR GB GR IT LI LU NL SE**

(71) Anmelder: **Melitta Haushaltsprodukte GmbH & Co. Kommanditgesellschaft
Ringstrasse 99
W-4950 Minden 1(DE)**

(72) Erfinder: **Der Erfinder hat auf seine Nennung verzichtet**

(74) Vertreter: **Loesenbeck, Karl-Otto, Dipl.-Ing. et al
Jöllenbecker Strasse 164
W-4800 Bielefeld 1(DE)**

(54) Einrichtung zur Herstellung von Brühgetränken.

(57) Bei dieser Einrichtung zur Herstellung von Brühgetränken ist eine Kanne (1) zur Aufnahme des Filtrates vorgesehen. Der Kannendeckel (3) hat einen Auslösepilz (7). Für die Handbrühung ist ein Filtergefäß (9) vorgesehen, das an seinem Aufsetzflansch (12) einen umlaufenden Schließrand (13) aufweist, mit dem es auf die Oberseite des Kannendeckels (3) aufsetzbar ist, so daß der Filtratdurchtrittsraum zum Schutz vor Aromaverlusten nach außen abgekapselt ist.

Fig. 1

Rank Xerox (UK) Business Services

Die Erfindung betrifft eine Einrichtung zur Herstellung von Brühgetränken, bestehend aus einer Kanne mit einem einen Auslösepilz aufweisenden Deckel und einem Filtergefäß.

Es ist bekannt, im Zusammenhang mit Kaffee- oder Teemaschinen Kannen mit Deckel einzusetzen (DE 39 14 852 A1), wobei der Deckel einen Auslösepilz trägt. Der Auslösepilz betätigt einen Auslaufverschluß des in die Kaffee- oder Teemaschine integrierten Filtergefäßes. Der Auslösepilz hat dabei eine Durchlauföffnung, so daß das Filtrat aus dem Filtergefäß durch den Auslösepilz und damit durch den Deckel in die Kanne gelangen kann. Zur Aufnahme des Auslösepilzes hat üblicherweise der Kannendeckel dabei eine Mulde, in deren Grund benachbart dem Fuß des Auslösepilzes ein oder mehrere Rücklauföffnungen vorgesehen sind, um etwaig insbesondere bei Fehlhandhabung auf den Auslaufpilz gelangendes Filtrat durch den Kannendeckel hindurch in das Innere der Kanne zu leiten.

Es besteht in der Praxis nun vielfach der Wunsch, eine derartige Kanne mit einen Auslösepilz aufweisendem Deckel flexibel, d. h. nicht nur im Zusammenhang mit einer Kaffee- oder Teemaschine, sondern auch mit einem von Hand aufsetzbaren Filtergefäß für die Herstellung eines Brühgetränkes von Hand benutzen zu können. Der vorliegenden Erfindung liegt von daher die Aufgabe zugrunde, eine Einrichtung der gattungsgemäßen Art zu schaffen, bei der das einfach und insbesondere unter bestmöglichem Aromaschutz möglich ist.

Die erfindungsgemäße Lösung ergibt sich aus dem kennzeichnenden Teil des Patentanspruches 1. Dadurch, daß ein Filtergefäß geschaffen ist, das einen mit einem Schließrand auf den Kannendeckel aufsetzbaren Aufsetzflansch hat, kann die Kanne ohne Abnahme des Kannendeckels, also wie bei Verwendung in der Maschine üblich, durch Aufsetzen eben dieses Filtergefäßes für die Handherstellung des Brühgetränkes genommen werden, und zwar unter bestmöglichem Aromaschutz. Der sich auf den Kannendeckel aufsetzende Schließrand des Aufsetzflansches des Filtergefäßes kapselt praktisch denjenigen Bereich, den der Filtratstrahl, der unten aus dem Filtergefäß austritt, in mehr oder weniger freiem Fall unter Einschluß der Durchquerung des Auslösepilzes durchläuft, nach außen gegen einen Austausch mit der umgebenden Atmosphäre ab. Gerade die Abkapselung des Filtratstrahles in diesem Bereich bewirkt einen sehr guten Schutz gegen Aromaverlust. Aus der Kanne hochsteigende Dämpfe, auch angereichert mit Aromaten, sammeln sich vorwiegend im mittleren oberen Bereich des insoweit leicht bombierten Kannendeckels. Insbesondere während der Brühphase kann es dabei auch zu einem geringfügigen Dampfaustritt aus den Rücklauföffnungen im Kannendeckel und womöglich auch aus der Durchlauföffnung im Auslösepilz, kommen. Auch dies bleibt ohne schädigenden Einfluß, da der kleine Raum, in den der Dampf eintreten kann, ja in dieser Phase durch den Schließrand nach außen abgekapselt ist.

In weiterer zweckmäßiger Ausgestaltung ist auf der Unterseite des Aufsetzflansches des Filtergefäßes noch ein den Auslösepilz übergreifender Haltestutzen angeordnet. Dies kann einmal innerhalb des abgekapselten Raumes eine zusätzliche Dampfsperre bilden und erleichtert zum anderen die Handhabung dadurch, daß das Filtergefäß zuverlässig und handhabungsbequem in einer definierten, abgesicherten Lage auf den Kannendeckel aufgesetzt werden kann.

Ein Ausführungsbeispiel einer derartigen Einrichtung wird nachstehend unter Bezugnahme auf die beigefügte Zeichnung näher beschrieben.

Es zeigen:

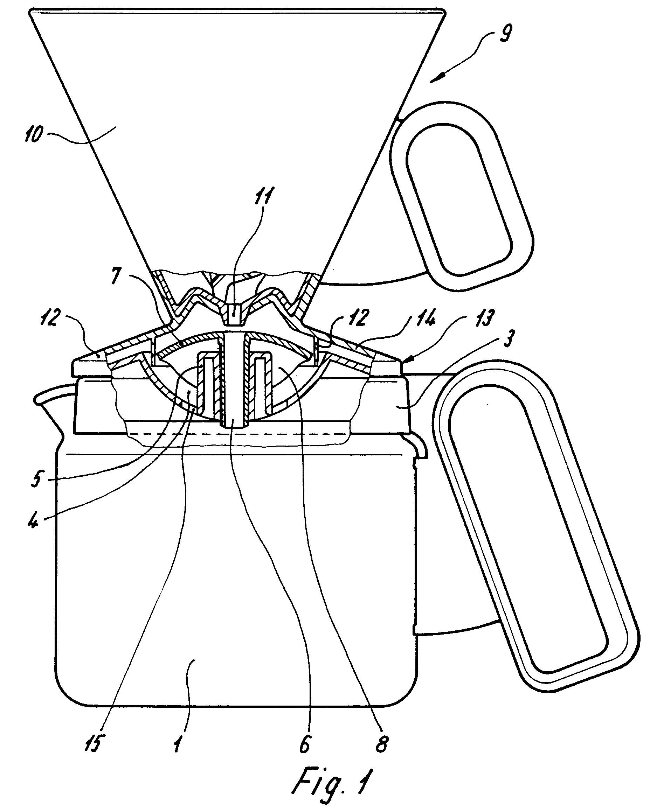

Figur 1 eine Einrichtung gemäß der Erfindung mit Teilschnittdarstellung des Kannendeckels mit dem Auslösepilz und des unteren Bereiches des Filtergefäßes,

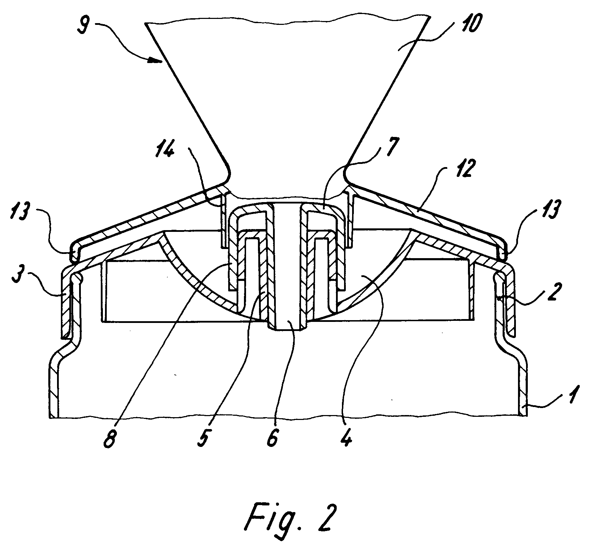

Figur 2 eine Teilschnittdarstellung des unteren Bereiches des Filtergefäßes, des Kannendeckels und des oberen Randbereiches der Kanne in einer Schnittführung quer zur Schnittführung in Figur 1.

Die Einrichtung zur Herstellung von Brühgetränken beinhaltet eine Kanne 1, die das fertige Brühgetränk aufnimmt. Auf den oberen Rand 2 der Kanne 1 ist ein Kannendeckel 3 aufgesetzt, der nach innen oben leicht hochgewölbt ist und in seiner Mitte eine etwa halbkreisförmig nach innen ausgewölbte Mulde 4 hat, aus deren Grund eine Steckaufnahme 5 vorsteht, in die ein hohler Steckzapfen 6 eines Auslösepilzes 7 eingesteckt ist, der in seiner geometrischen Grundform teils kreisabschnittförmig, teils rechteckig ausgebildet ist und mit seinen Seitenwänden 8 überwiegend in der Mulde 4 aufgenommen ist. Durch den hohlen Steckzapfen 6 gelangt das Filtrat durch den Kannendeckel 3 hindurch in die Kanne 1. Um die Kanne 1 mit aufgesetztem Kannendeckel 3 auch für die Handbrühung verwenden zu können, ist ein Filtergefäß 9 vorgesehen, dessen Filtertrichter 10 im Bodenbereich einen Auslaufstutzen 11 besitzt, der nach Aufsetzen auf die Kanne 1 bzw. den Kannendecke 13 in kurzem Abstand oberhalb der Bohrung des Steckzapfens 6 des Auslösepilzes 7 mündet. An den Fußbereich des Filtertrichters 10 ist nun ein Aufsetzflansch 12 angeformt, an dessen Außenrand umlaufend und nach unten vorstehend ein Schließrand 13 angeformt ist, der sich beim Aufsetzen des Filtergefäßes 9 auf die Oberseite des Kannendeckels 3 aufsetzt. Der Aufsetzflansch 12 hat im übrigen einen Verlauf entsprechend der Form des Kannendeckels 3.

Auf der Unterseite des Aufsetzflansches 12 des Filtergefäßes 9 ist ferner ein Haltestutzen 14 angeformt, der in seinen Querschnittsabmessungen so an die Querschnittsabmessungen des oberen Bereiches des Auslösepilzes 7 angepaßt ist, daß er bei aufgesetztem Filtergefäß den oberen Bereich des Auslösepilzes 7 übergreift und hierdurch dem auf den Kannendeckel aufgesetzten Filtergefäß einen sicheren definierten Halt gibt. Der zwischen der Oberseite des Kannendeckels 3 samt Auslösepilz 7 und der Unterseite des Aufsetzflansches 12 des Filtergefäßes 9 gebildete kleine Raum ist durch das Aufsetzen des Schließrandes 13 auf die Oberseite des Kannendeckels 3 nach außen zur umgebenden Atmosphäre hin abgekapselt. Der diesen Raum durchquerende Filtratstrahl kann somit nicht in einen Austausch zur umgebenden Atmosphäre gelangen. Etwaige kleine Dampfmengen, die während der Brühphase aus dem Steckzapfen 6 oder aus am Fuß der Steckaufnahme 5 im Kannendeckel 3 vorgesehenen Rücklauföffnungen 15 nach oben austreten könnten, sind in diesem kleinen Raum ebenfalls durch den Schließrand 13 abgekapselt.

Für aus den Rücklauföffnungen 15 austretende kleinere Dampfmengen wirkt bereits der den Auslösepilz 7 übergreifende Haltestutzen 14, der weit in den oberen Bereich der Mulde 4 eingreift, als Dampfsperre.

**Patentansprüche**

1. Einrichtung zur Herstellung von Brühgetränken, bestehend aus einer Kanne (1) einem einen Auslösepilz (7) aufweisenden Kannendeckel (3) und einem Filtergefäß (9), **dadurch gekennzeichnet**, daß das filtergefäß (9) einen mit einem Schließrand (13) auf den Kannendeckel (3) aufsetzbaren Aufsetzflansch (12) aufweist.

2. Einrichtung nach Anspruch 1, dadurch gekennzeichnet, daß der Schließrand (13) umlaufend am Außenrand des Aufsetzflansches (12) des Filtergefäßes (9) vorgesehen ist.

3. Einrichtung nach Anspruch 1 oder 2, dadurch gekennzeichnet, daß der Aufsetzflansch (12) des Filtergefäßes (9) einen der Form des Kannendeckels (3) entsprechenden Verlauf hat.

4. Einrichtung nach einem der vorhergehenden Unteransprüche, dadurch gekennzeichnet, daß auf der Unterseite des Aufsetzflansches (12) des Filtergefäßes (9) ein den Auslösepilz (7) übergreifender Haltestutzen (14) angeordnet ist.

*Fig. 1*

Fig. 2

Europäisches
Patentamt

# EUROPÄISCHER RECHERCHENBERICHT

Nummer der Anmeldung

EP    91 11 5691

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2 253 482 (ETABLISSEMENTS J. RAMOND & CIE) * Seite 2, Zeile 30 - Seite 4, Zeile 31; Abbildungen 1-6 * | 1 | A47G19/14 A47J31/06 |
| A | | 2-4 | |
| D,Y | DE-A-3 914 852 (MELITTA-WERKE BENTZ & SOHN) * das ganze Dokument * --- | 1 | |
| A | DE-A-3 307 338 (WESTFALISCHE KUPFER- U. MESSINGWERKE AG) * Seite 5, Absatz 6 - Seite 7, Absatz 1; Abbildungen 1-4 * ----- | 1-4 | |

| | RECHERCHIERTE SACHGEBIETE (Int. Cl.5) |
|---|---|
| | A47G A47J |

Der vorliegende Recherchenbericht wurde für alle Patentansprüche erstellt

| Recherchenort | Abschlußdatum der Recherche | Prüfer |
|---|---|---|
| DEN HAAG | 25 MAI 1992 | ELSWORTH D. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer
      anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
      nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes
      Dokument